# EUROPEAN PATENT APPLICATION

(11) **EP 3 470 711 A1**
(43) Date of publication of application: **17.04.2019**
(21) Application number: 17202099.2
(22) Date of filing: 16.11.2017
(51) Int. Cl.: F16J 15/16, F16J 15/3224

(54) **SEAL ASSEMBLY**

(30) Priority: 11.10.2017 US 201715730247
(71) Applicant: Aktiebolaget SKF, 41 550 Göteborg (SE)
(72) Inventor: Ryther, Tyler James, West Valley, UT Utah 84120 (US); Mornh, Harry, Midvale, UT Utah 84047 (US); Zitting, Mark K, Draper, UT Utah 84020 (US)
(74) Representative: Schonecke, Mitja

(57) **Abstract**

A seal assembly (10) includes a casing (11) coupled with a body (3) and an annular elastomeric seal member (12) having a base portion (16) coupleable with a casing (11) and a cantilever portion (18) radially deflectable with respect to the base portion (16). The cantilever portion (18) has an end (18a) connected with the base portion (16) and a free end (18b) with sealing lip (20). The lip has a sealing surface (22) extending about a centerline (20a) and is engageable with a shaft (1). An annular rigid tracking member (14) is attached to the seal member (12) proximal to the first end (18a) of the seal cantilever portion (18) and is spaced axially from the seal lip (20). The tracking member (14) has a centerline (14a) and a tracking surface (19) engageable by the shaft outer surface (1a) so that the tracking member centerline (14a) and the seal lip centerline (20a) each remain coaxial with the shaft axis (2) during rotation of the shaft (1). Further, a support member (15) prevents axial displacement of the seal member (12).

## Description

The present invention relates to seals, and more particularly to radial lip seals for sealing about rotatable shafts.

Radial lip seals are known and generally include an elastomeric seal member with an inner lip for sealing about a shaft outer surface. Typically, a garter spring or other biasing member is provided to maintain engagement between the seal lip and the shaft. Also, the seal member is usually provided within an assembly that includes a casing, which is typically formed of metal. As such, the seal assembly is mounted within the bore of a housing or other body by engagement (e.g., friction or interference) between the casing outer surface and the bore inner surface.

In one aspect, the present invention is a seal assembly for sealing between a shaft rotatable about a central axis and a body having a bore with a centerline. The seal assembly comprises a generally annular casing disposeable within the body bore and a generally annular elastomeric seal member having an outer base portion coupleable with the bore and an inner cantilever portion radially deflectable with respect to the base portion. The cantilever portion has a first end connected with the base portion and a second, free end having an annular sealing lip. The lip has an inner sealing surface extending circumferentially about a centerline and being sealingly engageable with the shaft. Further, a generally annular, rigid tracking member is attached to the seal member generally proximal to the first end of the seal cantilever portion so as to be spaced axially from the seal lip. The tracking member has a centerline and an inner circumferential tracking surface engageable by the shaft outer surface so that the tracking member centerline and the seal lip centerline each remain generally coaxial with the shaft axis during rotation of the shaft. Further, a generally radial support member is coupled with the casing and is configured to substantially prevent axial displacement of the seal member in a first direction along the central axis.

In another aspect, the present invention is again a seal assembly for sealing between a shaft rotatable about a central axis and a body having a bore with a centerline. The seal assembly comprises a generally annular casing disposeable within the body bore and a generally annular elastomeric seal member. The seal member includes an outer base portion coupleable with the casing and having opposing first and second ends, an inner cantilever portion having first and second ends and an annular seal lip extending inwardly from the second end and sealingly engageable with the shaft outer surface. A generally frustoconical central portion has an outer end integrally connected with the base portion second end and an inner end integrally connected with the cantilever portion first end such that the seal member has generally S-shaped axial cross-sections. A generally annular, rigid tracking member is attached to the seal member generally proximal to the first end of the seal cantilever portion so as to be spaced axially from the seal lip. The tracking member has an inner circumferential tracking surface engageable by the shaft outer surface such that radial displacement of the shaft bends the seal member central portion with respect to the base portion so that the seal lip remains generally coaxial with the shaft. Further, a generally radial support member is coupled with the casing and is configured to substantially prevent axial displacement of the seal member in a first direction along the central axis.

The foregoing summary, as well as the detailed description of the preferred embodiments of the present invention, will be better understood when read in conjunction with the appended drawings. For the purpose of illustrating the invention, there is shown in the drawings, which are diagrammatic, embodiments that are presently preferred. It should be understood, however, that the present invention is not limited to the precise arrangements and instrumentalities shown. In the drawings:
Fig. 1 is a broken-away, axial cross-sectional view of a seal assembly in accordance with the present invention, shown mounted on a shaft and disposed within a bore;
Fig. 2 is an enlarged view of the seal assembly of Fig. 1, shown separate from a shaft and bore;
Fig. 3 is a broken-away, perspective view of the seal assembly, shown in partial axial cross-section and taken from a first axial end of the assembly;
Fig. 4 is a broken-away, perspective view of the seal assembly, shown in partial axial cross-section and taken from a second axial end of the assembly;
Fig. 5 is another broken-away, axial cross-sectional view of the seal assembly shown mounted on a shaft and disposed within a bore;
Fig. 6 is another view of the seal assembly of Fig. 6, shown mounted on a shaft having a central axis offset from a bore centerline;
Fig. 7 is an enlarged, broken-away axial cross-sectional view of a seal member and attached tracking member of the seal assembly;
Fig. 8 is an enlarged, broken-away axial cross-sectional view of a casing of the seal assembly;
Fig. 9 is a perspective view of the seal assembly;
Fig. 10 is an axial cross-sectional view taken through the Fig. 9.

Certain terminology is used in the following description for convenience only and is not limiting. The words "inner", "inwardly" and "outer", "outwardly" refer to directions toward and away from, respectively, a designated centerline or a geometric center of an element being described, the particular meaning being readily apparent from the context of the description. Further, as used herein, the words "connected" and "coupled" are each intended to include direct connections between two members without any other members interposed therebetween and indirect connections between members in which one or more other members are interposed therebetween. The terminology includes the words specifically mentioned above, derivatives thereof, and words of similar import.

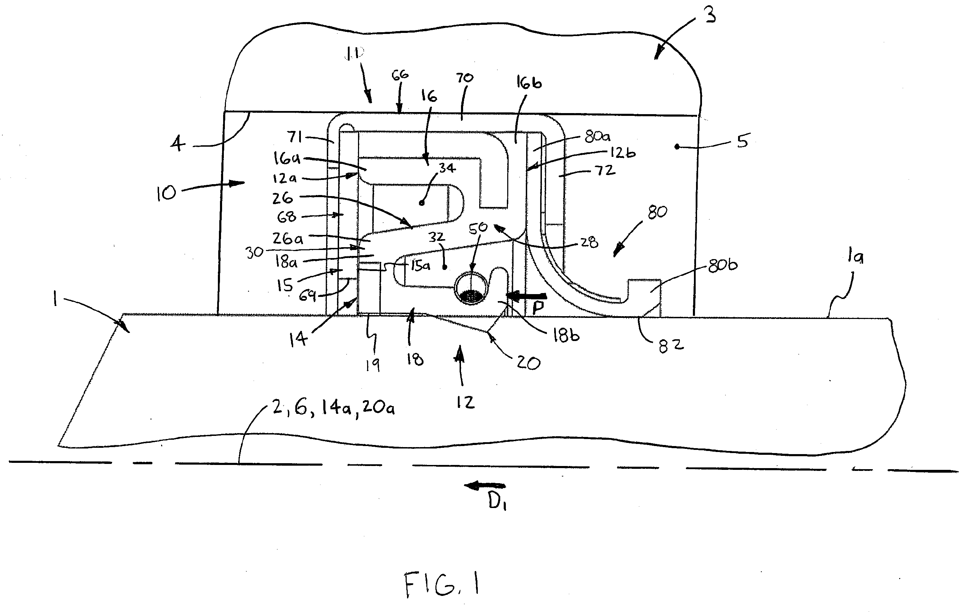

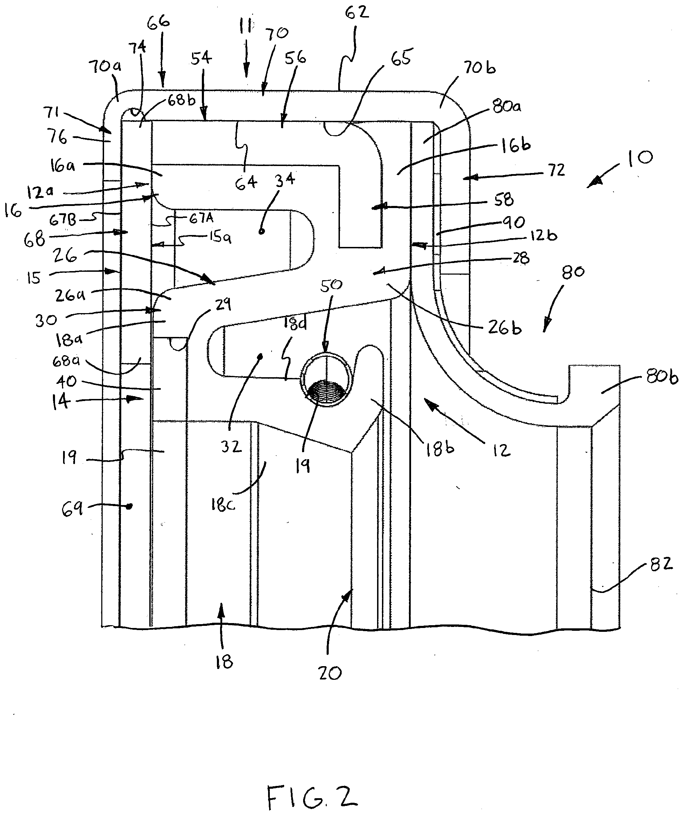

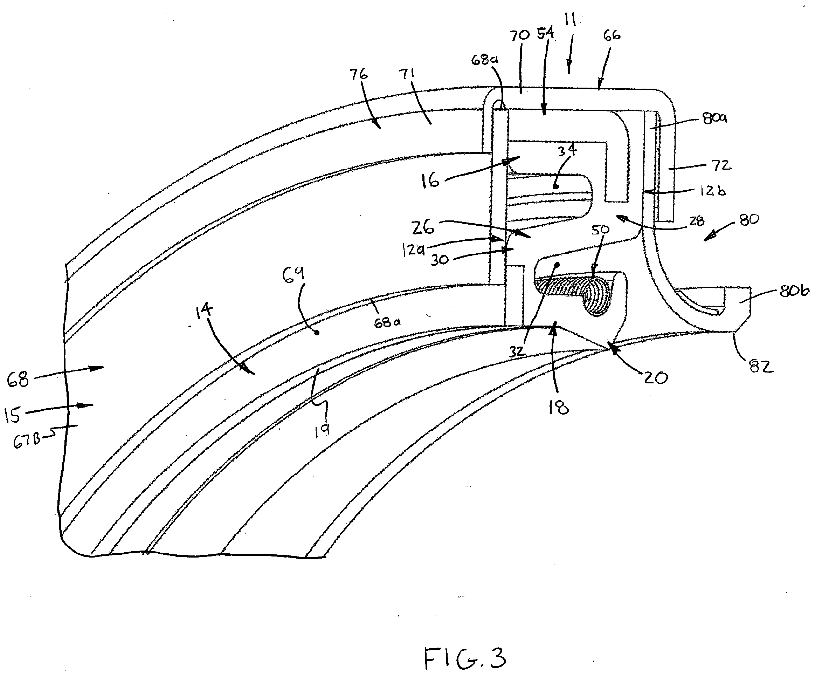

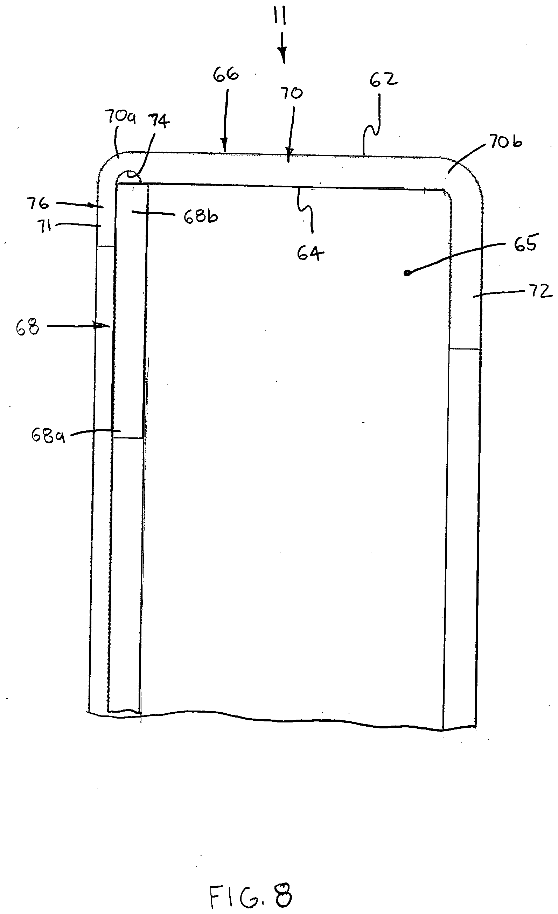

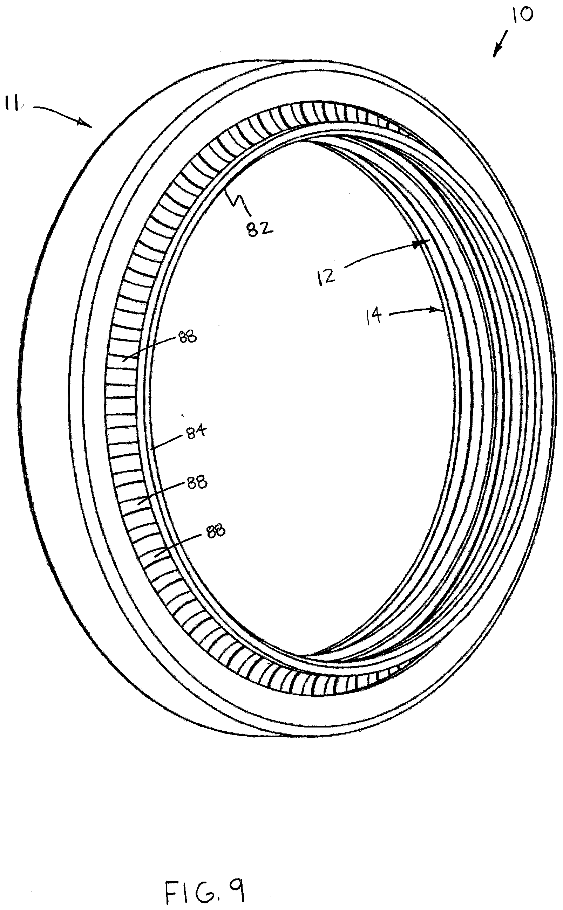

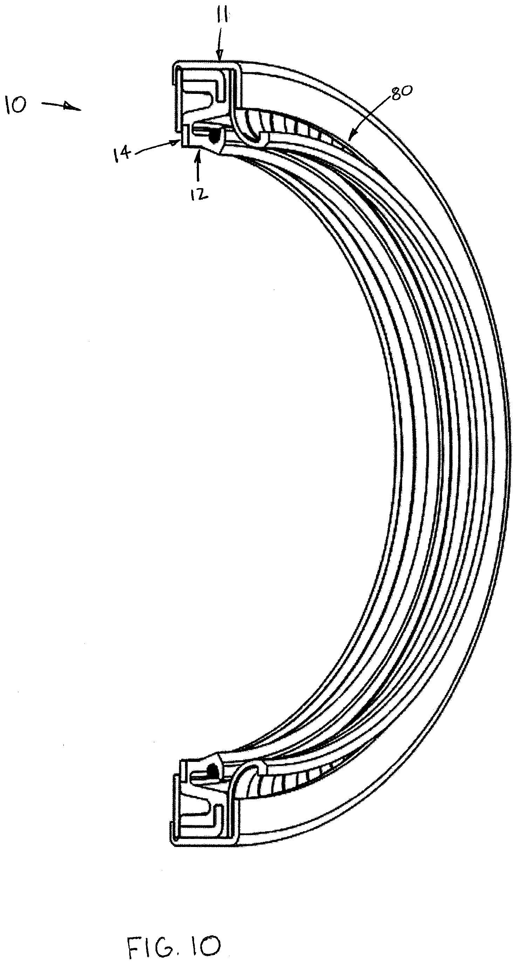

Referring now to the drawings in detail, wherein like numbers are used to indicate like elements throughout, there is shown in Figs. 1-10 a seal assembly 10 for sealing between a shaft 1 rotatable about a central axis 2 and a body 3, such as a hub, housing, etc., having an inner surface 4 defining a bore 5 with a centerline 6. The seal assembly 10 basically comprises a generally annular casing 11, a generally annular, generally flexible seal member 12 coupled with the casing 11, a generally annular, rigid tracking member 14 attached to the seal member 12 and a generally radial support member 15 coupled with the casing 11. The casing 11 is disposeable within the body bore 5, and is preferably frictionally engageable with the body inner surface 4 as discussed below. The seal member 12 has an outer base portion 16 with opposing first and second ends 16a, 16b, respectively, which is coupleable with the bore 3 so as to be non-rotatable about the bore centerline 6, and an inner cantilever portion 18 radially deflectable with respect to the base portion 16. The seal cantilever portion 18 has a first end 18a connected with the base portion 16, a second, free end 18b, and an annular seal lip 20 extending inwardly from the second end 18b. The seal lip 20 has an inner sealing surface 22 extending circumferentially about a centerline 20a and is sealingly engageable with the shaft outer surface 1a.

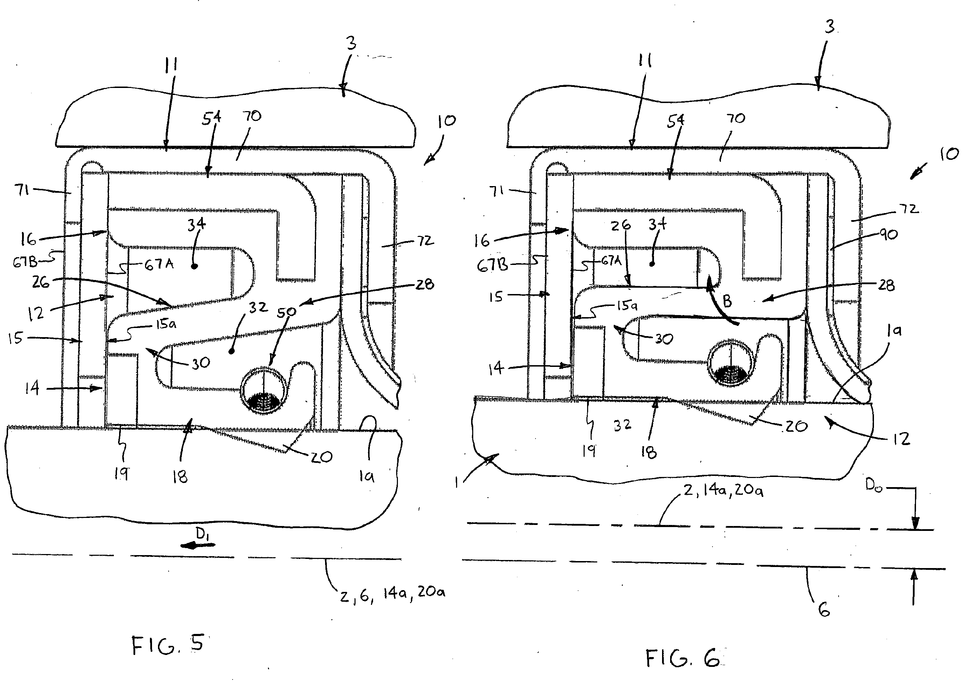

Further, the rigid tracking member 14 is attached to the seal member 12 generally proximal to the first end 18a of the seal cantilever portion 18 so as to be spaced axially from the seal lip 20. The tracking member 14 has a centerline 14a and an inner circumferential tracking surface 19 engageable by the shaft outer surface 1a so that the tracking member centerline 14a and the seal lip centerline 20a each remain generally coaxial with the shaft axis 2 during rotation of the shaft 1. As such, displacement of the tracking member 14 with respect to the seal base portion 16 deflects the seal cantilever portion 18 with respect to the base portion 16 when the seal assembly 10 is installed on a shaft 1 having a central axis spaced from the bore centerline 5. Thus, the tracking member 14 enables the seal lip 20 to be substantially centered about a shaft 1 without distortion when the seal assembly 10 is installed on shaft 1 that has shaft-to-bore misalignment, i.e., the shaft axis 2 is offset from the bore centerline 6 by a distance Do, as indicated in Fig. 6. Furthermore, the seal cantilever portion 18 continuously deflects with respect to the seal base portion 16 so that the seal lip centerline 20a remains generally coaxial with the shaft axis 2 when the shaft axis 2 rotates about the bore centerline 6. Thus, the tracking member 14 also enables the seal lip 20 to remain substantially centered about a shaft 1 without distortion when the seal assembly 10 is installed on shaft 1 that has dynamic run-out.

Referring to Figs. 1-4, the radial support member 15 is configured to substantially prevent axial displacement of the seal member 12 in a first direction D₁ along the central axis 12. That is, the support member 15 has a generally radial surface 15a and the seal member cantilever portion 18, specifically the first end 18a, or/and the tracking member 14 is disposed against the support member radial surface 15a. As such, the seal cantilever portion 18 or/and the tracking member 14 slides radially against the support member surface 15a when the tracking member 14 displaces with respect to the bore centerline 6. Due to the seal cantilever portion first end 18a and the tracking member 14 being disposed generally against the support member radial surface 15a, axial displacement of the seal cantilever portion 18 is prevented when relatively high fluid pressure P is exerted on the seal cantilever portion second, free end 18b, as indicated in Fig. 1. Thus, by having the support member 15, the seal assembly 10 has the capability of operating in relatively higher pressure applications without failure. In other words, the support member 15 prevents fluid pressure from displacing the seal member 12 in the axial direction D₁ until the seal lip 20 disengages from the shaft 1, which would enable fluid to leak past the seal member 12.

Referring to Figs. 1-7, the seal member 12 is preferably formed so as to also include a central portion 26 extending generally axially and radially between the outer and inner portions 16, 18, such that the seal member 12 has generally S-shaped axial cross-sections. More specifically, the seal member central portion 26 is preferably generally frustoconical and has an outer end 26b integrally connected with the base portion second end 16b so as to form an outer hinge 28 and an inner end 26a integrally connected with the cantilever portion first end 18a so as to form an inner hinge 30. With such a central portion 26, the seal member 12 has a generally annular inner cavity 32 extending generally axially inwardly from the seal member second axial end 12b and between the base portion 16 and the cantilever portion 18, and a generally annular outer cavity 34 extending generally axially inwardly from the member first axial 12a end and spaced radially outwardly from the first cavity 32. Thus, the seal central portion 26 extends or is defined between the two cavities 32, 34, and enables the central portion 16 and the cantilever portion 18 to move in a bellows-like manner, as described below.

More specifically, the seal cantilever portion 18 is bendable about the inner hinge 30 to radially displace the seal lip 20 with respect to the lip centerline 20a and the seal central portion 26 is bendable about the outer hinge 28 to radially displace the tracking member 14 and the seal cantilever portion 18 with respect to the base portion 16. In other words, the seal cantilever portion 18 is deflectable radially generally within the inner cavity 32 to radially displace the seal lip 20 with respect to the lip centerline 20a. Also, the seal central portion 26 is deflectable radially generally within the outer cavity 34 so as to radially displace both the seal cantilever portion 18 and the tracking member 14 with respect to the seal base portion 16, as indicated by arrow B in Fig. 6. Thus, radial displacement of the shaft 1 displaces the tracking member 14 and bends the seal member central portion 26 with respect to the base portion 16 about the outer hinge 28, so as to deflect/bend generally within the outer cavity 34, such that the seal lip 20 remains generally coaxial with the shaft 1 and does not distort during shaft rotation.

Preferably, the seal member 12 is formed of an elastomeric material, such as natural or synthetic rubber, but may be formed of any other appropriate material, such as another thermosetting polymer, a thermoplastic polymer such as polytetrafluoroethylene ("PTFE"), etc. The tracking member 14 is preferably formed of a metallic material having a hardness lesser than a hardness of the shaft 1, such as for example brass, bronze, etc. However, the tracking member 14 may alternatively be formed of a sufficiently rigid, non-metallic material such as an appropriate rigid polymer, ceramic, graphite, etc.

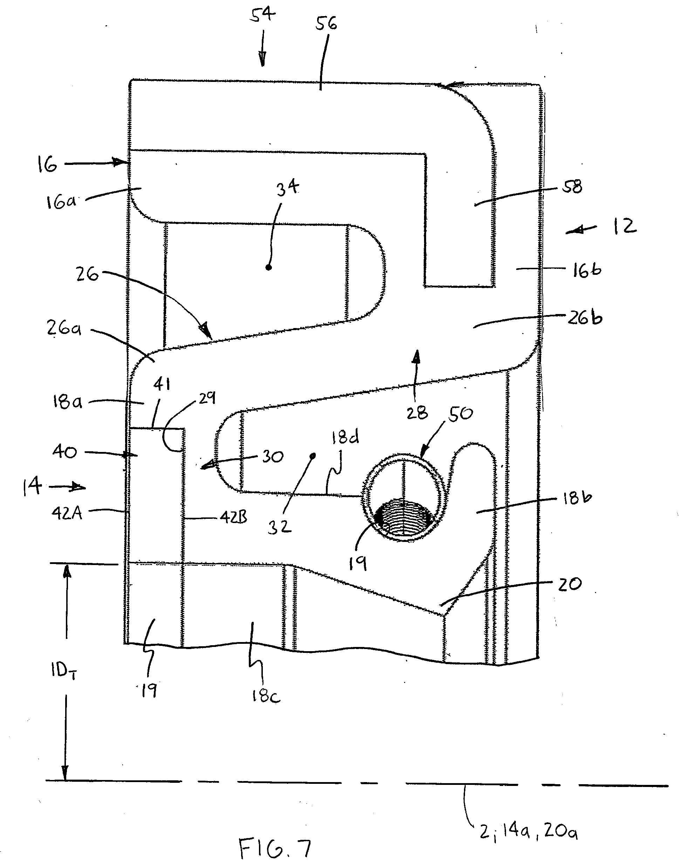

Referring again to Figs. 1-7, the tracking member 14 preferably includes a generally flat ring 40 providing the inner circumferential tracking surface 19 and further having an opposing outer circumferential surface 41 and generally flat side surfaces 42A, 42B, as indicated in Fig. 7, such that the tracking member 14 has generally rectangular axial cross-sections. However, the tracking member 14 may be formed or shaped in any other appropriate manner, such as having may have a generally square or generally tapering cross-sections or even be complex-shaped. The tracking member 14 is preferably sized having an inner diameter ID_{T} (Fig. 7) that is slightly larger than the outer diameter (not indicated) of the shaft 1, such that the tracking member 14 fits about the shaft 1 with a loose running fit or similar amount of relatively minimal clearance. Further, the tracking member 14 is preferably disposed within an open annular pocket 29 formed at the integral intersection of the first ends 18a, 26a of the cantilever portion 18 and the central portion 26, and is most preferably molded therein, but may be secured by any other appropriate means, such as by an adhesive, fasteners, etc.

Still referring to Figs. 1-7, the seal assembly 10 preferably further comprises a generally annular biasing member 50 disposed about the seal member cantilever portion 18 and configured to bias the seal lip 20 radially inwardly against the shaft 1. More specifically, the cantilever portion 18 has opposing inner and outer circumferential surfaces 18c, 18d and an annular recess 19 extending radially inwardly from the outer surface 18d, with the biasing member 50 being a conventional garter spring disposed within the recess 19. However, the biasing member 50 may be any other appropriate type of biasing member, such as for example, a solid, elastic polymeric ring, or/and disposed about a cantilever portion 18 without a recess, etc.

Further, the seal assembly 10 preferably also further comprises an outer, rigid support member 54, with the seal member base portion 16 being coupled with the support member 54 to provide rigidity to the base portion 16. Preferably, the support member 54 is generally L-shaped and has an axially-extending portion 56 and a radially-inwardly extending portion 58 extending into the base portion 16 of the elastomeric seal member 12. However, the support member 54 may be formed in any other appropriate manner or the seal assembly 10 may be fabricated without any additional support member.

Referring now to Figs. 1-6 and 8-10, the generally annular casing 11 is provided to contain the seal member 12, tracking member 14 and other components as described herein, and to couple the seal member 12 with the body 3. The casing 11 has an outer circumferential surface 62 engageable with the inner surface 4 of the body bore 5, preferably by an interference or friction fit, to removably couple the seal assembly 10 with the body 3, and an opposing inner circumferential surface 64. The casing inner surface 64 defines a casing bore 65, the elastomeric seal member 12 and the rigid tracking member 14 being disposed generally within the casing bore 65. Preferably the casing 60 includes a generally annular body 66 having an outer axial section 70 with opposing first and second ends 70a, 70b and providing the casing inner and outer surfaces 62, 64, and a first radial section 71 extending inwardly from axial section first end 70a, and a second radial section 72 extending inwardly from the axial section second end 70b.

Still referring to Figs. 1-6 and 8-10, the support member 15 is substantially fixed relative to the body 3, is generally washer-like and preferably includes a generally annular disk 68. The support member disk 68 has an inner radial end 68a defining a central opening 69, the shaft 1 extending through the opening 69, an opposing outer radial end 68b, and inner and outer radially-extending surfaces 67A, 67B, the inner surface 67A providing the support surface 15a. The outer radial end 68b is coupled with the casing 11 such that the support member 15 retains the seal member 12 and tracking member 14 within the casing bore 65.

More specifically, the outer radial end 68b is disposed between the casing first radial section 71 and the sealing member base portion 16 so as to removably couple the support member 15 with the casing 11. Thereby, the seal member 12 and the tracking member 14 are retained generally between the support member 15 and the casing second radial section 72. Although the casing 11 and the support member 15 are preferably separately formed components to facilitate assembly of the seal member 12 and the tracking member 14, it is within the scope of the present invention to integrally form the casing 11 and support member 15 as a one-piece component (e.g., in a stamping operation) if desired for certain applications.

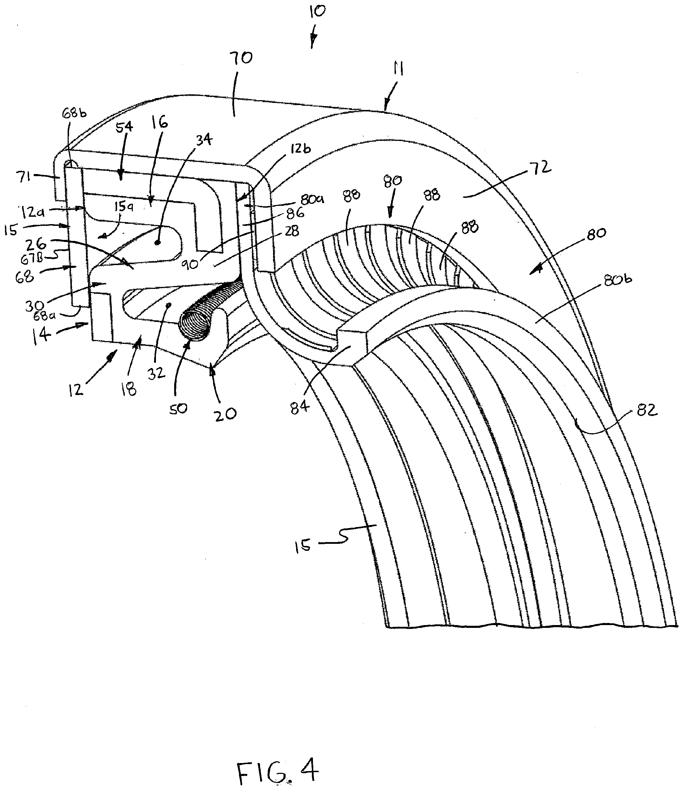

Referring to Figs. 1-6, 9 and 10, the seal assembly 10 also preferably further comprises a generally annular excluder member 80 having an outer end 80a coupled with the seal member 12 and an inner end 80b engageable with the shaft 1, and is preferably formed ofPTFE. More specifically, the excluder inner end 80b has an inner circumferential surface 82 that is spaced axially from the seal lip 20 and is engageable with the shaft outer surface 1a, the excluder 80 being configured to substantially prevent solids from contacting the seal lip 20. The excluder member outer end 80a extends generally radially and is retained generally between the seal member base portion 16 and the casing radial portion 72, and the extruder inner end 80b extending partly axially away from the seal lip 20. As best shown in Figs. 4, 9 and 10, the excluder member 80 is preferably formed of inner and outer rings 84, 86, respectively, and a plurality of circumferentially-spaced curved or arcuate ribs 88 extending between the inner and outer rings 84, 86, but may be formed in any other appropriate manner. Additionally, the seal assembly 10 preferably further includes a gasket 90 disposed, and preferably compressed, between the excluder member outer end 80a and the casing radial portion 72 and functions to ensure proper axial loading on the components of the seal assembly 10.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the present invention as generally defined in the appended claims.

## Claims

1. A seal assembly for sealing between a shaft rotatable about a central axis and a body having a bore with a centerline, the seal assembly comprising:
a generally annular casing disposeable within the body bore;
a generally annular elastomeric seal member having an outer base portion coupled with the casing and an inner cantilever portion radially deflectable with respect to the base portion, the cantilever portion having a first end connected with the base portion and a second, free end having an annular sealing lip, the lip having an inner sealing surface extending circumferentially about a centerline and being sealingly engageable with the shaft;
a generally annular, rigid tracking member attached to the seal member generally proximal to the first end of the seal cantilever portion so as to be spaced axially from the seal lip, the tracking member having a centerline and an inner circumferential tracking surface engageable by the shaft outer surface so that the tracking member centerline and the seal lip centerline each remain generally coaxial with the shaft axis during rotation of the shaft; and
a generally radial support member coupled with the casing and configured to substantially prevent axial displacement of the seal member in a first direction along the central axis.

2. The seal assembly as recited in claim 1 wherein displacement of the tracking member with respect to the seal base portion deflects the seal cantilever portion with respect to the base portion when the seal assembly is installed on a shaft having a central axis spaced from the bore centerline.

3. The seal assembly as recited in claim 2 wherein the seal cantilever portion continuously deflects with respect to the seal base portion so that the seal lip centerline remains generally coaxial with the shaft axis when the shaft axis rotates about the bore centerline.

4. The seal assembly as recited in claim 3 wherein the support member has a generally radial surface and at least one of the seal cantilever portion and the tracking member slides radially against the support member surface when the tracking member displaces with respect to the bore centerline.

5. The seal assembly as recited in claim 1 wherein the support member has a generally radial surface and at least one of the seal member cantilever portion and the tracking member is disposed against the support member radial surface.

6. The seal assembly as recited in claim 5 wherein the at least one of the seal cantilever portion and the tracking member slides radially against the support member surface when the tracking member displaces with respect to the bore centerline.

7. The seal assembly as recited in claim 5 wherein the seal cantilever portion has a first axial end connected with the base portion and an opposing, second end providing the seal lip, at least one of the seal cantilever portion first end and the tracking member being disposed generally against the support member radial surface so as to substantially prevent axial displacement of the of the seal cantilever portion when relatively high fluid pressure is exerted on the seal cantilever portion second end.

8. The seal assembly as recited in claim 1 wherein the elastomeric seal member has opposing first and second axial ends and further includes a central portion extending between the second end of the base portion and the first end of the cantilever portion such the seal member has generally S-shaped axial cross-sections.

9. The seal assembly as recited in claim 8 wherein the seal member central portion has an inner end integrally connected with the seal cantilever portion so as to form an inner hinge and an outer end integrally connected with the seal base portion so as to form an outer hinge, the seal cantilever portion being bendable about the inner hinge to radially displace the seal lip with respect to the lip centerline and the seal central portion being bendable about the outer hinge to radially displace the tracking member and the seal cantilever portion with respect to the base portion.

10. The seal assembly as recited in claim 1 wherein the seal member has opposing first and second axial ends, a generally annular inner cavity extending generally axially inwardly from the first axial end between the base portion and the cantilever portion and a generally annular outer cavity extending generally axially inwardly from the member first axial end and spaced radially outwardly from the first cavity such that a seal central portion is defined between the two cavities, the seal cantilever section being deflectable radially within the inner cavity to radially displace the seal lip with respect to the lip centerline and the seal central portion being deflectable radially within the outer cavity so as to radially displace both the seal cantilever portion and the tracking member with respect to the seal base portion.

11. The seal assembly as recited in claim 1 further comprising at least one of:
a generally annular biasing member disposed about the seal member cantilever portion and configured to bias the seal lip radially inwardly against the shaft; and
an outer, rigid support member, the seal member base portion being coupled with the support member.

12. The seal assembly as recited in claim 1 wherein at least one of:
the tracking member is formed of a metallic material having a hardness lesser than a hardness of the shaft; and
the tracking member includes a generally flat ring.

13. The seal assembly as recited in claim 1 wherein the casing has an outer circumferential surface engageable with the body bore to removably couple the seal assembly with the body and an opposing inner circumferential surface defining a casing bore, the elastomeric seal member and tracking member being disposed generally within the casing bore.

14. The seal assembly as recited in claim 1 wherein:
the casing includes an outer axial section with opposing first and second ends, a first radial section extending inwardly from the axial portion first end and a second radial section extending inwardly from the axial portion second end; and
the support member includes a generally annular disk having an inner radial end defining a central opening, the shaft extending through the central opening, and an outer radial end disposed between the casing first radial section and the sealing member base portion so as to couple the support member with the casing, the seal member and the tracking member being retained between the support member and the casing second radial section.

15. The seal assembly as recited in claim 1 wherein the seal assembly further comprises a generally annular excluder member having an outer end coupled with the seal member and an inner end having an inner circumferential surface spaced axially from the seal lip and engageable with the shaft outer surface, the excluder being configured to substantially prevent solids from contacting the seal lip.
